# EUROPEAN PATENT APPLICATION

(11) **EP 4 800 070 A1**
(43) Date of publication of application: **02.09.2026**
(21) Application number: 24893229.5
(22) Date of filing: 05.11.2024
(51) Int. Cl.: C08L 67/04, B33Y 70/00

(54) **3D PRINTING MATERIAL, PRINTING METHOD AND PREPARATION METHOD**

(30) Priority: 20.11.2023 CN 202311546780
(71) Applicant: JF Polymers (Suzhou) Co., Ltd., Suzhou, Jiangsu 215513 (CN)
(72) Inventor: HAO, Mingyang, Suzhou, Jiangsu 215513 (CN); LUO, Xiaofan, Suzhou, Jiangsu 215513 (CN); LV, Jie, Suzhou, Jiangsu 215513 (CN)
(74) Representative: Santarelli
(86) International application number: PCT/CN2024/129852
(87) International publication number: WO 2025/108071

(57) **Abstract**

Provided are a three-dimensional (3D) printing material, and a printing method and preparation method thereof, which relate to the technical field of 3D printing. The 3D printing material provided in the present disclosure is produced by introducing a crystalline polymer with a high melting point based on a material including only a single crystalline polymer. The 3D printing material exhibits both excellent printing warpage resistance and superior heat resistance.

## Description

### Technical Field

The present disclosure relates to the technical field of three-dimensional (3D) printing, and in particular to a 3D printing material, and a printing method and preparation method thereof.

### Background of the Invention

Material-extrusion based 3D printing (ME-3DP) is one of the mainstream additive manufacturing technologies for polymer materials. Fused filament fabrication (FFF) serves as one of the mainstream technological forms of ME-3DP. FFF works by melting a polymer material at a high temperature to produce a melt with fluidity and then extruding the melt in a metered manner to achieve layer-by-layer stacking and forming. Currently, amorphous polymers have been widely used as printing materials for FFF printing. When crystalline polymers are used for FFF printing, during the cooling and solidification process after melt extrusion, the formation of polymer crystal structures causes significant volume shrinkage of printed parts, resulting in considerable internal stress and warpage of the printed parts. Therefore, highly crystalline polymers present a high risk of printing warpage and involve a complex forming mechanism. That is, the higher the crystallinity, the stronger the crystallization capacity, and the faster the crystallization of a crystalline polymer, the greater the risk and degree of printing warpage. However, the crystallization of a polymer is one of the most effective approaches to improve the heat resistance of a printed part of the polymer. Regarding the use of crystalline polymers as printing materials, it is a common technical problem to achieve excellent warpage resistance during printing while ensuring that a printed part acquires high crystallinity for superior heat resistance.

Therefore, it is necessary to provide a 3D printing material and printing method that can both guarantee prominent warpage resistance for a printed part and improve the heat resistance of the printed part.

### Summary of the Invention

A primary objective of the present disclosure is to provide a 3D printing material with excellent heat resistance and printing warpage resistance, and a printing method and preparation method thereof.

In a first aspect, the present disclosure provides a 3D printing material, including: a first crystalline polymer, where an upper limit temperature of a crystalline melting temperature range of the first crystalline polymer is defined as a first upper limit temperature; and a second crystalline polymer, where a lower limit temperature of a crystalline melting temperature range of the second crystalline polymer is defined as a second lower limit temperature; an upper limit temperature of the crystalline melting temperature range of the second crystalline polymer is defined as a second upper limit temperature; and the second lower limit temperature is higher than the first upper limit temperature. When the 3D printing material is heated to a target printing temperature, the first crystalline polymer is melted, the 3D printing material is in a molten fluid state, and at least a portion of the second crystalline polymer remains in a crystalline state. The target printing temperature is between the first upper limit temperature and the second upper limit temperature.

In some embodiments, the target printing temperature is between the first upper limit temperature and the second lower limit temperature.

In some embodiments, under preset conditions, a target part printed from the 3D printing material has a warpage rate of 0% to 10% after cooling; the target part has a length of 150 mm, a width of 9.6 mm, and a height of 20 mm; and the preset conditions include: a printing feedstock: a filament with a diameter of 1.75±0.05 mm of the 3D printing material; a printing nozzle diameter: 0.4 mm; slicing parameters during the printing: a line width of 0.4 mm, a layer height of 0.2 mm, and a shell count of 13; a printing speed: 100 mm/s; a printing temperature: 190°C to 230°C; and a build plate temperature: 30°C to 60°C.

In some embodiments, the warpage rate is 0% to 5%.

In some embodiments, the second crystalline polymer is prepared from a same type of polymer with different optical activities.

In some embodiments, the first crystalline polymer includes a homocrystal (HC) formed from a first polymer; and the second crystalline polymer includes a stereocomplex crystal (SC) formed from the first polymer.

In some embodiments, the first crystalline polymer includes HC of polylactic acid (PLA); and the second crystalline polymer includes SC of the PLA.

In some embodiments, the crystalline melting temperature range of the first crystalline polymer is 150°C to 180°C; and the crystalline melting temperature range of the second crystalline polymer is 200°C to 250°C.

In some embodiments, a crystallinity of the second crystalline polymer is 5% to 80%.

In some embodiments, the crystallinity of the second crystalline polymer is 10% to 50%.

In some embodiments, the first crystalline polymer includes HC formed from a first polymer; and the second crystalline polymer includes HC formed from a second polymer.

In some embodiments, the first crystalline polymer includes HC of PLA; and the second crystalline polymer includes HC of polybutylene terephthalate (PBT) or HC of polycaprolactam (PA6).

In some embodiments, the crystalline melting temperature range of the first crystalline polymer is 150°C to 180°C; and the crystalline melting temperature range of the second crystalline polymer is 200°C to 250°C.

In some embodiments, a crystallinity of the second crystalline polymer is 5% to 80%.

In some embodiments, the crystallinity of the second crystalline polymer is 10% to 50%.

In a second aspect, the present disclosure provides a printing method of a 3D printing material, including: feeding the 3D printing material into a print head of a 3D printer, where the 3D printing material includes the 3D printing material described above; and heating the 3D printing material to a target printing temperature, extruding from the print head, and solidifying to complete printing.

In a third aspect, the present disclosure further provides a preparation method of a 3D printing material, including: acquiring a first polymer, where an upper limit temperature of a crystalline melting temperature range of the first polymer is defined as a first upper limit temperature; acquiring a second polymer, where a lower limit temperature of a crystalline melting temperature range of the second polymer is defined as a second lower limit temperature; an upper limit temperature of the crystalline melting temperature range of the second polymer is defined as a second upper limit temperature; and the second lower limit temperature is higher than the first upper limit temperature; mixing the first polymer and the second polymer to produce a blended composite material including a first crystalline polymer and a second crystalline polymer; and subjecting the blended composite material to extrusion molding to produce the 3D printing material, where a target printing temperature of the 3D printing material is between the first upper limit temperature and the second upper limit temperature.

In some embodiments, the first crystalline polymer is poly-L-lactic acid (PLLA); the second crystalline polymer is poly-D-lactic acid (PDLA); the blended composite material includes SC of PLA and HC of PLA; the HC includes the PLLA or the PDLA; and the SC has a crystallinity of 5% to 80% in the blended composite material.

In some embodiments, the first crystalline polymer includes HC formed from the first polymer; and the second crystalline polymer includes HC formed from the second polymer.

In some embodiments, the first polymer includes PLA, and the first crystalline polymer includes HC of the PLA; and the second polymer includes PBT or PA6, and the second crystalline polymer includes HC of the PBT or HC of the PA6.

According to the above technical solutions, the 3D printing material provided in the present disclosure is produced by introducing a crystalline polymer with a high melting point (a second crystalline polymer) based on a material including only a single crystalline polymer (a first crystalline polymer). The 3D printing material exhibits both excellent printing warpage resistance and superior heat resistance.

### Brief Description of the Drawings

To describe the technical solutions in the embodiments of the present disclosure clearly, the accompanying drawings required for describing the embodiments are briefly described below. Apparently, the accompanying drawings in the following description show merely some embodiments of the present disclosure, and those of ordinary skill in the art may still derive other accompanying drawings from these accompanying drawings without creative efforts.
FIG. 1 is a schematic diagram illustrating a crystalline melting temperature range of a 3D printing material according to some embodiments of the present disclosure;
FIG. 2 is a schematic diagram illustrating a crystalline melting temperature range of a 3D printing material according to some embodiments of the present disclosure;
FIG. 3 is a schematic diagram illustrating a crystalline melting temperature range of a 3D printing material according to some embodiments of the present disclosure;
FIG. 4 is a schematic diagram illustrating a crystalline melting temperature range of a 3D printing material according to some embodiments of the present disclosure;
FIG. 5 is a schematic diagram of a target printing model adopted in some embodiments of the present disclosure;
FIG. 6 is a photograph of a finished product printed from a 3D printing material in Example 1;
FIG. 7 is a photograph of a finished product printed from a 3D printing material in Example 2;
FIG. 8 is a photograph of a finished product printed from a 3D printing material in Example 3;
FIG. 9 is a photograph of a finished product printed from a 3D printing material in Example 4;
FIG. 10 is a photograph of a finished product printed from a 3D printing material in Comparative Example 1; and
FIG. 11 is a photograph of a finished product printed from a 3D printing material in Comparative Example 2.

### Detailed Description of Embodiments

The following description provides specific application scenarios and requirements of this specification, with the purpose of enabling those skilled in the art to make and use the content in this specification. For those skilled in the art, various partial modifications to the disclosed embodiments are obvious, and without departing from the spirit and scope of this specification, the general principles defined herein can be applied to other embodiments and application. Therefore, the specification is not limited to the embodiments, but is the consistent with the widest scope of claims.

To facilitate the understanding of the present disclosure, the present disclosure is described more completely below with reference to the accompanying drawings. Preferred embodiments of the present disclosure are shown in the accompanying drawings. However, the present disclosure can be implemented in many different forms without departing from the core spirit of the present disclosure, and is not limited to the embodiments described herein. On the contrary, these examples are provided such that the disclosure of the present disclosure can be understood thoroughly and comprehensively.

The terms used herein are merely intended to describe specific examples or embodiments, rather than to limit the present disclosure. For example, unless expressly stated otherwise, the singular forms "a", "an" and "this" used herein may also include plural forms. In the present disclosure, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In the present disclosure, "X includes at least one of A, B, or C" means X includes at least A, X includes at least B, or X includes at least C. In other words, X may include only any combination of A, B, and C, or include any combination of A, B, and C and other possible content/element. The any combination of A, B, and C may be A, B, C, AB, AC, BC, or ABC.

In consideration of the following description, these and other features of the present disclosure, operations and functions of related structural elements, and the efficiency of component combination and manufacturing can be significantly improved. The description also includes graphics and texts in all referenced accompanying drawings of the present disclosure, all of which constitute a part of the present disclosure. However, it should be clearly understood that the accompanying drawings are provided merely for illustration and description purposes, and are not intended to limit the scope of the present disclosure. It should also be understood that the accompanying drawings are not drawn to scale. For the convenience of description, the terms that may appear in the present disclosure are explained below.

A crystalline polymer refers to a polymer in which at least one component is crystallizable and has a sufficient sequence length for crystallization. In a crystalline polymer, regions with regularly arranged molecules are defined as crystalline regions, and regions with randomly arranged molecules are defined as amorphous regions. A percentage occupied by the crystalline regions is referred to as crystallinity. For the convenience of description, the crystalline polymer used in the present disclosure refers to a crystalline polymer including both crystalline and amorphous regions. It should be noted that the first crystalline polymer and the second crystalline polymer in the present disclosure are both crystalline polymers, and the first crystalline polymer and the second crystalline polymer include different types of crystals.

The presence of branches or terminal groups in polymer molecules may account for incomplete crystallization. Due to incomplete crystallization, crystalline polymers differ from low-molecular-weight crystalline compounds that possess distinct melting points (Tₘ). The melting of a crystalline polymer occurs over a relatively wide temperature range. For the convenience of description, the crystalline melting temperature range mentioned in the present disclosure refers to a temperature range over which a crystalline polymer completely melts.

A lower limit temperature of the crystalline melting temperature range refers to a temperature at which crystals in the crystalline polymer begin to melt. At this lower limit temperature, a molecular structure of the material begins to change, gradually transitioning from an ordered arrangement to a disordered arrangement. Accordingly, the material changes from a solid state to a liquid state, thereby enabling fluidity and plasticity.

In a first aspect, the present disclosure provides a 3D printing material. The 3D printing material includes at least two forms of crystalline polymers: a first crystalline polymer and a second crystalline polymer. A crystalline melting temperature range of the first crystalline polymer is between a first lower limit temperature T1 and a first upper limit temperature T2. A crystalline melting temperature range of the second crystalline polymer is between a second lower limit temperature and a second upper limit temperature. The second lower limit temperature is higher than the first upper limit temperature. That is, the 3D printing material is produced by mixing two crystalline polymers with different crystalline melting temperature ranges, and crystalline melting temperature ranges of the first crystalline polymer and the second crystalline polymer in the 3D printing material do not intersect with each other. When the 3D printing material is heated to a target printing temperature between the first upper limit temperature and the second upper limit temperature, the first crystalline polymer is melted, while at least a portion of the second crystalline polymer remains in a crystalline state. In this way, the 3D printing material is in a molten fluid state and can flow at the target printing temperature, and a portion of the 3D printing material remains in a crystalline state upon cooling. Thus, the 3D printing material undergoes smaller shrinkage deformation than a 3D printing material that is entirely amorphous at the target printing temperature.

The first crystalline polymer and the second crystalline polymer may be PLA, nylon, a photosensitive resin, or any mixture or combination thereof. For example, the first crystalline polymer and the second crystalline polymer may be polymers that have different crystal structures but are of a same type, such as HC of PLA and SC of PLA. The first crystalline polymer and the second crystalline polymer may also be polymers of different types, such as PLA and PBT, or PLA and PA6.

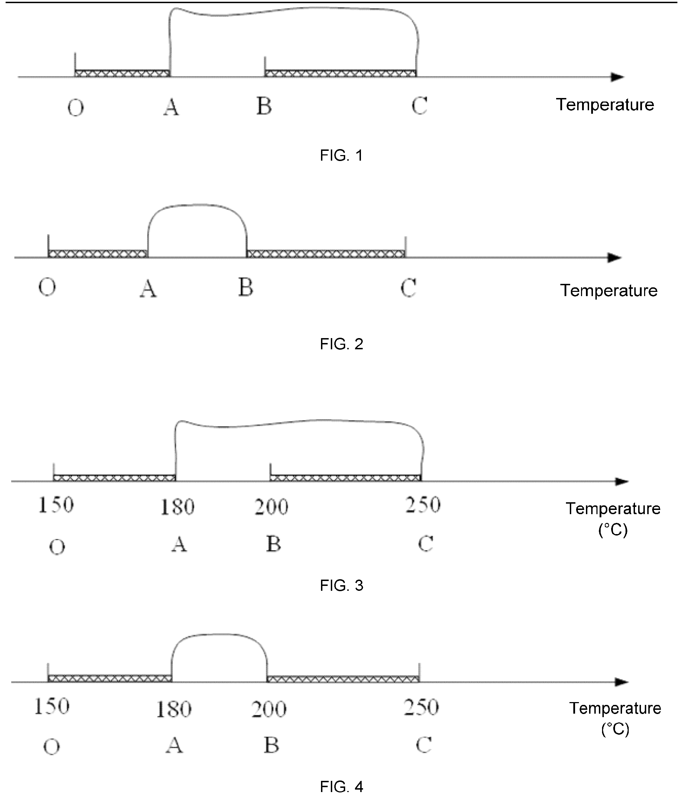

FIG. 1 is a schematic diagram illustrating a crystalline melting temperature range of the 3D printing material according to some embodiments of the present disclosure. As shown in FIG. 1, on a temperature coordinate axis, a point O represents the first lower limit temperature, a point A represents the first upper limit temperature, and a temperature range between O and A represents the crystalline melting temperature range of the first crystalline polymer. Further, a point B represents the second lower limit temperature, a point C represents the second upper limit temperature, and a temperature range between B and C represents the crystalline melting temperature range of the second crystalline polymer. For example, if a temperature corresponding to the point A is 100°C, then the first lower limit temperature O of the crystalline melting temperature range of the first crystalline polymer can be a temperature lower than 100°C, such as 99°C, 90°C, 80°C, or 70°C, and the crystalline melting temperature range [B, C] of the second crystalline polymer can be higher than the point A. For another example, if the temperature corresponding to the point A is 180°C, then the first lower limit temperature O of the crystalline melting temperature range of the first crystalline polymer may be a temperature lower than 180°C, such as 120°C, 130°C, 140°C, or 150°C, and the crystalline melting temperature range [B, C] of the second crystalline polymer may be higher than the point A, for example, [B, C] = [200°C - 250°C].

According to positions of the points on the temperature coordinate axis, an order of these temperatures from low to high is as follows: O < A < B < C. When the 3D printing material is heated to the first lower limit temperature O, the first crystalline polymer begins to melt. When the 3D printing material is further heated to the point A, the first crystalline polymer is completely melted. When the 3D printing material is further heated to the point B, crystals of the second crystalline polymer begin to melt. When the 3D printing material is further heated to the point C, the second crystalline polymer is completely melted.

In the present disclosure, based on this, molten states of the first crystalline polymer and the second crystalline polymer in the 3D printing material can be adjusted by controlling a temperature, thereby adjusting an overall molten state of the 3D printing material. When a temperature is between the point A and the point C, the first crystalline polymer in the 3D printing material is completely melted, and a portion of the second crystalline polymer is in a molten state. In this case, although a portion of the second crystalline polymer in the 3D printing material remains in a crystalline state, the 3D printing material as a whole can exhibit a molten fluid state. In this case, since the 3D printing material as a whole exhibits a molten fluid state, a normal printing operation can be completed. Moreover, since a portion of the second crystalline polymer in the 3D printing material remains in a crystalline state and is still solid, these crystals are widely distributed throughout a molten fluid of the 3D printing material and can function as "physical crosslinking points" or "composite filler particles". Consequently, while improving the heat resistance of the 3D printing material, this case can effectively prevent the warpage deformation caused by internal stress generated during cooling and solidification after printing due to thermal expansion and contraction, thereby endowing the 3D printing material with excellent warpage resistance. The 3D printing material provided in the present disclosure has both excellent printing warpage resistance and superior heat resistance.

Therefore, in the present disclosure, based on a material including only a single crystalline polymer (the first crystalline polymer), a crystalline polymer with a high melting point (the second crystalline polymer) is introduced to produce the 3D printing material with both excellent heat resistance and superior printing warpage resistance. A printing temperature (namely, the target printing temperature) of the 3D printing material provided in the present disclosure is between the first upper limit temperature and the second upper limit temperature. The 3D printing material provided in the present disclosure can have various forms. For example, according to actual needs, the 3D printing material can be prepared into a filament, a pellet, or other physical forms.

Based on the above description, the target printing temperature for 3D printing with the 3D printing material should be between the first upper limit temperature and the second lower limit temperature. FIG. 2 illustrates a situation where a temperature of the 3D printing material is controlled between the point A and the point B according to some embodiments of the present disclosure. In this case, the first crystalline polymer in the 3D printing material is completely melted, while the second crystalline polymer has not yet begun to melt. Thus, the 3D printing material as a whole can exhibit a molten fluid state. Since the 3D printing material as a whole exhibits a molten fluid state, a normal printing operation can be completed. Moreover, since the second crystalline polymer in the 3D printing material remains in a crystalline state, these crystals are widely distributed throughout a molten fluid of the 3D printing material and can function as "physical crosslinking points" or "composite filler particles". Consequently, while improving the heat resistance of the 3D printing material, this case can effectively prevent the warpage deformation caused by internal stress generated during cooling and solidification after printing due to thermal expansion and contraction, thereby endowing the 3D printing material with excellent warpage resistance. Consequently, a printing temperature (namely, the target printing temperature) of the 3D printing material provided in the present disclosure can be further between the first upper limit temperature A and the second lower limit temperature B.

The printing warpage resistance of the 3D printing material can be measured by an amount of deformation generated during printing. The smaller the warpage of a 3D printed part, the better the warpage resistance of the 3D printing material. The warpage resistance can be measured by a warpage rate. The warpage rate can be measured by the following method: In a preset target external environment, the 3D printing material with target dimensions is printed on a target build plate using a target process flow to produce a rectangular prism target part with target dimensions (L × W × H). A surface of the target part in contact with the target build plate is defined as a bottom surface, and the target part has a length L, a width W, and a height H. After the target part is cooled, heights at which four corners of the bottom surface of the target part detach from the target build plate (namely, distances from the four corners to a topmost point of the target build plate) are measured, and an average value h is calculated. A warpage rate (warp) of the 3D printing material is then defined as a ratio of the average value h to the height H of the target part. That is, the warpage rate is calculated according to the following formula:$warp = \frac{h}{H} \times 100 % .$

Obviously, for a given set of L, W, and H, the smaller the average height h of the four corners of the bottom surface from the target build plate after cooling, the smaller the deformation of the target part during cooling and thus the smaller the warpage rate. In the present disclosure, the printing warpage resistance of the 3D printing material can be measured by an amount of deformation during printing. The smaller the warpage of a 3D printed part, the better the warpage resistance of the 3D printing material.

It should be understood that, under different standard dimensions and different external cooling environments, a same material experiences varying cooling rates and cooling uniformity levels, and thus exhibits different warpage rates.

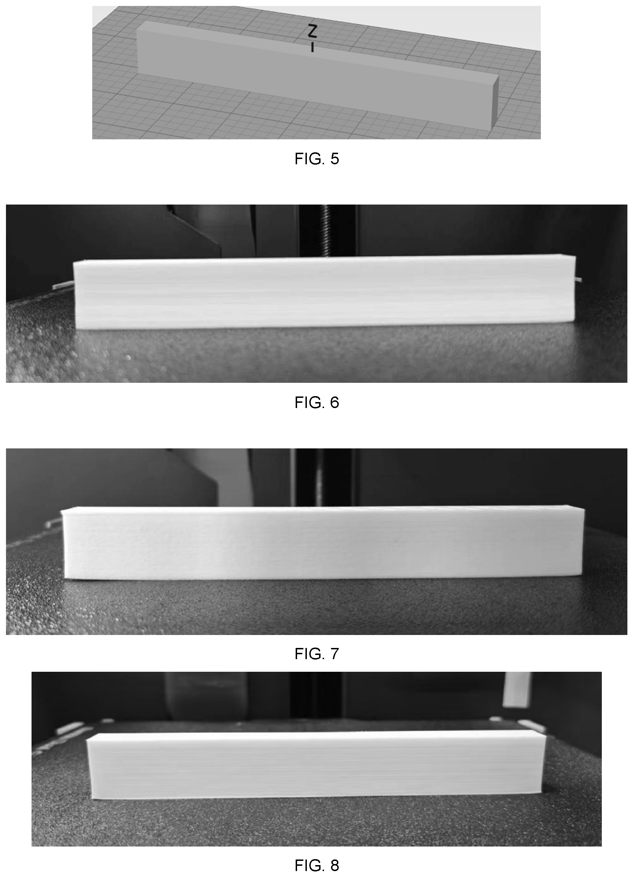

FIG. 5 is a schematic diagram of a target printing model adopted in some embodiments of the present disclosure. The target dimensions of the target part in the target printing model may be as follows: L = 150 mm, W = 9.6 mm, and H = 20 mm. In this case, the warpage rate is calculated according to the following formula: $warp = \frac{h}{20} \times 100 % .$

According to some embodiments of the present application, the preset target external environment may include: a printing feedstock: a PLA filament with a diameter of 1.75±0.05 mm; a printing nozzle diameter: 0.4 mm; slicing parameters during the printing: a line width of 0.4 mm, a layer height of 0.2 mm, and a shell count of 13; and a printing speed: 100 mm/s. In addition, a printing temperature in these embodiments is appropriately selected according to a material type and extrusion characteristics. For example, for the PLA material, a printing temperature is 190°C to 230°C and a build plate temperature is 30°C to 60°C.

For example, if the target part (printed part) has a length of 150 mm and a height of 20 mm and an average warped height h of the four corners after cooling is 1 mm, then the warpage rate (warp) is calculated to be 5%.

For example, in some embodiments, under the preset printing conditions (that is, the target part has a length of 150 mm, a width of 9.6 mm, and a height of 20 mm; and the preset printing conditions include: a printing feedstock: a filament with a diameter of 1.75±0.05 mm of the 3D printing material; a printing nozzle diameter: 0.4 mm; slicing parameters during the printing: a line width of 0.4 mm, a layer height of 0.2 mm, and a shell count of 13; a printing speed: 100 mm/s; a printing temperature: 190°C to 230°C; a build plate temperature: 30°C to 60°C; and a printing air cooling intensity: 100%). The target part printed from the 3D printing material has a warpage rate of 0% to 10% after cooling. That is, the warpage rate of the target part after cooling can be any percentage between 0% and 10%, such as 0%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, or 10%. Further, the warpage rate of the target part in the present application is maintained at 0% to 5%. That is, the warpage rate can be any percentage between 0% and 5%, such as 0%, 0.2%, 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, or 5.0%.

In some embodiments, the second crystalline polymer is prepared from a same type of polymer with different optical activities.

A polymer is produced through the polymerization of monomer molecules. When the monomer molecules of the polymer exhibit different optical activities, types of crystals formed by the monomer molecules may vary accordingly. Accordingly, the same type of polymer may include a plurality of different crystal forms. In the same type of polymer, different crystal forms correspond to different physical properties.

In the present disclosure, the second crystalline polymer in the 3D printing material can be produced from the same type of polymer through crystal transformation. That is, the first crystalline polymer and the second crystalline polymer in the 3D printing material can be derived from the same type of polymer. Since the first crystalline polymer and the second crystalline polymer are the same type of polymer, there is excellent compatibility between the first crystalline polymer and the second crystalline polymer.

In some embodiments, the first crystalline polymer includes HC formed from the polymer, and the second crystalline polymer includes SC formed from the polymer.

When crystal types of a polymer include HC and SC, a crystalline polymer corresponding to the HC can serve as the first crystalline polymer of the 3D printing material, and a crystalline polymer corresponding to the SC can serve as the second crystalline polymer of the 3D printing material. Generally, in a same type of polymer, a melting point of SC is higher than a melting point of HC. Therefore, the second lower limit temperature of the second crystalline polymer is higher than the first upper limit temperature of the first crystalline polymer.

For example, the first crystalline polymer may include HC of PLA, and the second crystalline polymer may include SC of the PLA. Naturally, those skilled in the art will appreciate that the first crystalline polymer and the second crystalline polymer may also include SCs of other materials. For illustrative purposes only, the present disclosure is described with PLA as an example.

PLA, an aliphatic polymer compound, is a novel degradable polymer material. Lactic acid, a monomer for synthesizing PLA, exhibits stereoisomerism and has two optical isomers: L-lactic acid and D-lactic acid. Accordingly, PLA has three isomers, including PLLA, PDLA, and poly-D,L-lactic acid (PDLLA). Both PLLA and PDLA are crystalline polymers, while PDLLA is an amorphous polymer with no crystallinity. The crystallization performance of PLA has a significant impact on the mechanical properties of PLA. Due to the regularly and tightly arranged molecular chains in crystalline regions, the crystallization of PLA is conducive to improving the mechanical properties and heat resistance of PLA.

Under different external conditions, different crystal forms can transform into each other. A crystal formed from pure PLLA or pure PDLA alone is HC. SC is a special crystal form of PLA, which can be formed in a blended system of PLLA and PDLA. SC exhibits better heat resistance and chemical stability than HC. In the present disclosure, the first crystalline polymer of the 3D printing material may be a crystalline polymer corresponding to HC formed from pure PLLA alone, and the second crystalline polymer of the 3D printing material may be a crystalline polymer corresponding to SC formed from PLLA and PDLA together. Alternatively, the first crystalline polymer of the 3D printing material may be a crystalline polymer corresponding to HC formed from pure PDLA alone, and the second crystalline polymer of the 3D printing material may be a crystalline polymer corresponding to SC formed from PLLA and PDLA together.

In some embodiments, the crystalline melting temperature range of the first crystalline polymer can be 150°C to 180°C, and the crystalline melting temperature range of the second crystalline polymer can be 200°C to 250°C.

FIG. 3 is a schematic diagram illustrating a crystalline melting temperature range of the 3D printing material according to some embodiments of the present disclosure. As shown in FIG. 3, in a 3D printing material prepared with PLA as a raw material, a temperature corresponding to the point A (the first upper limit temperature) is 180°C, a temperature corresponding to the point B (the second lower limit temperature) is 200°C, and a temperature corresponding to the point C (the second upper limit temperature) is 250°C.

When the 3D printing material is heated to 150°C, the first crystalline polymer (including HC of PLA) begins to melt. When the 3D printing material is further heated to 180°C, the first crystalline polymer is completely melted. When the 3D printing material is further heated to 200°C, crystals of the second crystalline polymer (including SC of PLA) begin to melt. When the 3D printing material is further heated to 250°C, the second crystalline polymer is completely melted.

In the present disclosure, the target printing temperature can be controlled at 180°C to 250°C. For example, the target printing temperature can be any one selected from the group consisting of 180°C, 185°C, 190°C, 195°C, 200°C, 205°C, 210°C, 215°C, 220°C, 225°C, 230°C, 235°C, 240°C, 245°C, and 250°C, or any temperature between any two temperature values of the aforementioned temperature values. At such a temperature, HC of PLA in the 3D printing material is completely melted, while a portion of the second crystalline polymer (including SC of PLA) is in a molten state. At this stage, although a portion of the second crystalline polymer (including SC of PLA) in the 3D printing material remains in a crystalline state, the 3D printing material as a whole can exhibit a molten fluid state. In this case, since the 3D printing material as a whole exhibits a molten fluid state, a normal printing operation can be completed. Moreover, since a portion of the second crystalline polymer (including SC of PLA) in the 3D printing material remains in a crystalline state and is still solid, these crystals are widely distributed throughout a molten fluid of the 3D printing material and can function as "physical crosslinking points" or "composite filler particles". Consequently, while improving the heat resistance of the 3D printing material, this case can effectively reduce the warpage deformation caused by internal stress generated during cooling and solidification after printing due to thermal expansion and contraction and crystallization, thereby endowing the 3D printing material with excellent warpage resistance.

FIG. 4 is a schematic diagram illustrating a crystalline melting temperature range of the 3D printing material according to some embodiments of the present disclosure. As shown in FIG. 4, in the present disclosure, the target printing temperature can be further controlled at 180°C to 200°C. For example, the target printing temperature can be any one selected from the group consisting of 180°C, 182°C, 185°C, 188°C, 190°C, 193°C, 195°C, 197°C, and 200°C, or any temperature between any two temperature values of the aforementioned temperature values. In this case, the HC of PLA in the 3D printing material is completely melted, while the SC of PLA in the 3D printing material has not yet begun to melt. The 3D printing material as a whole can exhibit a molten fluid state. Since the 3D printing material as a whole exhibits a molten fluid state, a normal printing operation can be completed. Moreover, since the SC of PLA in the 3D printing material remains in a crystalline state, these crystals are widely distributed throughout a molten fluid of the 3D printing material and can function as "physical crosslinking points" or "composite filler particles". Consequently, while improving the heat resistance of the 3D printing material, this case can effectively reduce the warpage deformation caused by internal stress generated during cooling and solidification after printing due to thermal expansion and contraction and crystallization, thereby endowing the 3D printing material with excellent warpage resistance.

In some embodiments, a crystallinity of the second crystalline polymer is 5% to 80%. In the 3D printing material prepared with PLA as a raw material, a crystallinity of the second crystalline polymer is 5% to 80%. That is, a proportion of the SC of PLA in the 3D printing material is 5% to 80%. If the crystallinity of the second crystalline polymer is too low, the heat resistance of a printed part cannot be effectively improved. If the crystallinity of the second crystalline polymer is too high, the material will be insufficiently melted at the printing temperature, resulting in excessively high melt viscosity and failed extrusion of the filament for printing. Specifically, the crystallinity of the second crystalline polymer can be any percentage value selected from the group consisting of 5%, 10%, 20%, 30%, 40%, 50%, 60%, 79%, and 80%, or any percentage between any two of the aforementioned percentage values.

In some embodiments, the crystallinity of the second crystalline polymer can be 10% to 50%. It has been found through experiments that, when the crystallinity of the second crystalline polymer is 10% to 50%, for example, when the crystallinity of the second crystalline polymer is 10%, 15%, 20%, 25%, 30%, 35%, 40%, 45%, 50%, etc., the printing material melts moderately and exhibits excellent printing processability during printing, and a printed part can exhibit superior heat resistance.

According to some embodiments of the present application, the crystallinity of the 3D printing material is tested by differential scanning calorimetry (DSC) in the present disclosure. A specific test method is as follows:
(1) With a 3D printing filament as a test object, 3 mg to 8 mg of a filament sample is collected.
(2) A first heating curve of the filament sample from a low temperature to a completely molten state under a nitrogen atmosphere is tested by DSC, with a heating rate of 10°C/min.
(3) A melting enthalpy △Hₘ of the second crystalline polymer is acquired from the first heating curve of DSC. Accordingly, the crystallinity of the second crystalline polymer in the 3D printing filament is defined as follows: $X = \frac{Δ {H}_{m}}{Δ {H}_{m}^{0}} \times 100 %$
where $Δ {H}_{m}^{0}$ represents a theoretical melting enthalpy of the second crystalline polymer at 100% crystallinity.

In a second aspect, the present disclosure provides a printing method of a 3D printing material. The printing method can include the following steps: The 3D printing material is fed into a print head of a 3D printer, where the 3D printing material includes the 3D printing material described above. The 3D printing material is heated to a target printing temperature, extruded from the print head, and then solidified to complete printing. The 3D printing material provided in the present disclosure can be used in various 3D printing processes to prepare 3D printed parts of various shapes. During these printing processes, a printing temperature is controlled at the target printing temperature defined above. An original form of the 3D printing material can be selected or adjusted according to user requirements. For example, the 3D printing material provided in the present disclosure can be an ME-3DP material, which is mainly in the following two forms: (1) filament suitable for FFF; and (2) pellet suitable for large-scale additive manufacturing. The 3D printing material provided in the present disclosure can also be in other forms, which are not described in detail here.

In a third aspect, the present disclosure also provides a preparation method of a 3D printing material. The preparation method may include the following steps: PLLA and PDLA are acquired and mixed according to a preset ratio to produce a blended composite material. The blended composite material includes SC of PLA and HC of PLA. The HC includes the PLLA or the PDLA. The SC has a crystallinity of 5% to 80% in the blended composite material. The blended composite material is subjected to extrusion molding to produce the 3D printing material.

In the present disclosure, pure PLLA and pure PDLA can be mixed to produce a blended system with the SC of PLA. The PLLA and the PDLA can undergo co-crystallization in a ratio of 1:1 to produce the SC of PLA. During the preparation method, the ratio of the PLLA to the PDLA can be adjusted. When the ratio of the PLLA to the PDLA is not equal to 1, the excess one forms corresponding HC, such that the resulting blended composite material will include both HC and SC of PLA, which is the 3D printing material provided in the present disclosure. Therefore, in order to obtain a 3D printing material with both HC and SC of PLA, the preset ratio of the PLLA to the PDLA can be controlled within a specified range deviating from 1:1. For example, the preset ratio can be 0.5:1, 0.6:1, 0.7:1, 0.8:1, 0.9:1, 1.1:1, 1.2:1, 1.3:1, 1.4:1, 1.5:1, 1.6:1, etc.

In the present disclosure, after the PLLA and the PDLA are mixed, a temperature can be controlled within a range of 150°C to 250°C to ensure co-crystallization between the PLLA and the PDLA, thereby forming the SC of PLA.

Specific preparation examples related to the above content of the present disclosure are provided below. It should be clarified that the following examples are provided merely for illustrating the 3D printing material, the printing method of the 3D printing material, and the preparation method of the 3D printing material in the present disclosure. The specific embodiments and parameters used accordingly are only one or a combination of many processes and methods consistent with the above description. According to the content described in the present disclosure, those skilled in the art can prepare the 3D printing material by the above method using other parameters without departing from the core spirit of the present disclosure. For example, in the following examples, PLA is used as a raw material to prepare the 3D printing material. Those skilled in the art can fully understand that the 3D printing material, the printing method of the 3D printing material, and the preparation method of the 3D printing material can also be applied to other raw materials, as long as the core spirit of the present disclosure is satisfied. Due to limited space, examples of other raw materials are not specifically described in the present disclosure.

As described above, the examples and comparative examples in the present disclosure are all subjected to performance tests using the same methods.

### 1. Warpage rate test conditions:

(1) Dimensions of a target printing model which is a rectangular prism: a length L of 150 mm, a width W of 9.6 mm, and a height H of 20 mm.
(2) Printing feedstock: a filament with a diameter of 1.75±0.05 mm; and a printing nozzle diameter: 0.4 mm.
(3) Slicing parameters: a line width of 0.4 mm, a layer height of 0.2 mm, and a shell count of 13.
(4) Printing speed: 100 mm/s.
(5) A printing temperature is appropriately selected according to a material type and extrusion characteristics. For example, for the PLA material, a printing temperature is 190°C to 230°C and a build plate temperature is 30°C to 60°C.
(6) Printing air cooling intensity: 100%.

In comparative warpage resistance tests among a same type of printing materials, the same printer, build plate material, and slicing parameters are adopted. After printing, heights at which four corners of a printed part detach from a build plate are measured, and an average value h is then calculated. A warpage rate (Warp) is defined as a ratio of the average value h to a total height of the printed part (20 mm), and is calculated according to the following formula: $warp = \frac{h}{20} \times 100 % .$

2. Heat resistance test: The heat resistance is tested by the A₁₂₀ method with a force of 10 N and a heating rate of 120°C/h according to the GB/T 1633-2000 standard "*Plastics-Thermoplastic materials-Determination of Vicat softening temperature (VST)*".

### 3. Crystallinity test for the second crystalline polymer:

(1) With a 3D printing filament as a test object, 3 mg to 8 mg of a filament sample is collected.
(2) A first heating curve of the filament sample from a low temperature to a completely molten state under a nitrogen atmosphere is tested by DSC, with a heating rate of 10°C/min.
(3) A melting enthalpy △Hₘ of the second crystalline polymer is acquired from the first heating curve of DSC. Accordingly, the crystallinity of the second crystalline polymer in the 3D printing filament is defined as follows: $X = \frac{Δ {H}_{m}}{Δ {H}_{m}^{0}} \times 100 %$
where $Δ {H}_{m}^{0}$ represents a theoretical melting enthalpy of the second crystalline polymer at 100% crystallinity.

### Example 1

In this example, a 3D printing material was provided. The 3D printing material was prepared by the following method: PLLA and PDLA were mixed in a molar ratio of 4:1 with a processing temperature of 150°C to 250°C to produce a blended composite material, which was an SC-PLA printing material including both HC and SC, namely, the 3D printing material.

In the method of this example, an amount of PLLA was larger than an amount of PDLA. Correspondingly, a first crystalline polymer in the 3D printing material included excess PLLA, and a second crystalline polymer in the 3D printing material was SC of PLA. According to the above-mentioned crystallinity test method, in a first heating range of 30°C to 250°C with a heating rate of 10°C/min, a melting enthalpy of the second crystalline polymer was 36.4 J/g. Since a theoretical melting enthalpy $Δ {H}_{m}^{0}$ of the SC of PLA was 142 J/g, a crystallinity of the second crystalline polymer was calculated to be 25.6%.

The SC-PLA printing material was subjected to a warpage resistance printing test at 210°C to produce a printed part. FIG. 6 shows a photograph of the printed part. The printed part in FIG. 6 has the same dimensions as the target printing model, and is a rectangular prism with a length L of 150 mm, a width W of 9.6 mm, and a height H of 20 mm. As shown in FIG. 6, the printed part underwent no warpage as a whole, indicating excellent warpage resistance. A warpage rate of the printed part shown in FIG. 6 was measured by the above-mentioned warpage rate test method to be 0.24%.

The printed part was further subjected to a Vicat heat resistance test by the A₁₂₀ method with a force of 10 N and a heating rate of 120°C/h according to the GB/T 1633-2000 standard "*Plastics-Thermoplastic materials-Determination of Vicat softening temperature (VST)*". VST of the printed part was determined to be 156.9°C, indicating superior heat resistance.

Thus, the SC-PLA printing material provided in this example exhibited excellent warpage resistance during printing and enabled superior heat resistance of a printed part.

### Example 2

In this example, a 3D printing material was provided. The 3D printing material was prepared by the following method: PLLA and PDLA were mixed in a molar ratio of 7:3 with a processing temperature of 150°C to 250°C to produce a blended composite material, which was an SC-PLA printing material including both HC and SC, namely, the 3D printing material.

In the method of this example, an amount of PLLA was larger than an amount of PDLA. Correspondingly, a first crystalline polymer in the 3D printing material included excess PLLA, and a second crystalline polymer in the 3D printing material was SC of PLA. According to the above-mentioned crystallinity test method, in a first heating range of 30°C to 250°C with a heating rate of 10°C/min, a melting enthalpy of the second crystalline polymer was 53.2 J/g. Since a theoretical melting enthalpy $Δ {H}_{m}^{0}$ of the SC of PLA was 142 J/g, a crystallinity of the second crystalline polymer was calculated to be 37.5%.

The SC-PLA printing material was subjected to a warpage resistance printing test at 210°C to produce a printed part. FIG. 7 shows a photograph of the printed part. The printed part in FIG. 7 has the same dimensions as the target printing model, and is a rectangular prism with a length L of 150 mm, a width W of 9.6 mm, and a height H of 20 mm. As shown in FIG. 7, the printed part underwent no warpage as a whole, indicating excellent warpage resistance. A warpage rate of the printed part shown in FIG. 7 was measured by the above-mentioned warpage rate test method to be 3%.

The printed part was further subjected to a Vicat heat resistance test by the A₁₂₀ method with a force of 10 N and a heating rate of 120°C/h according to the GB/T 1633-2000 standard "*Plastics-Thermoplastic materials-Determination of Vicat softening temperature (VST)*". VST of the printed part was determined to be 166.3°C, indicating superior heat resistance.

Thus, the SC-PLA printing material provided in this example exhibited excellent warpage resistance during printing and enabled superior heat resistance of a printed part.

### Example 3

In this example, a 3D printing material was provided. The 3D printing material was prepared by the following method: PLA and PBT were mixed in a mass ratio of 4:1 with a processing temperature of 150°C to 250°C to produce a blended composite material, which was a 3D printing material including a PLA crystalline phase and a PBT crystalline phase.

In the method of this example, a first crystalline polymer in the 3D printing material was PLA, and a second crystalline polymer in the 3D printing material was PBT. According to the above-mentioned crystallinity test method, in a first heating range of 30°C to 250°C with a heating rate of 10°C/min, a melting enthalpy of the second crystalline polymer was 18.4 J/g. Since a theoretical melting enthalpy $Δ {H}_{m}^{0}$ of PBT was 140.5 J/g, a crystallinity of the second crystalline polymer was calculated to be 13.1%.

The printing material was subjected to a warpage resistance printing test at 210°C to produce a printed part. FIG. 8 shows a photograph of the printed part. The printed part in FIG. 8 has the same dimensions as the target printing model, and is a rectangular prism with a length L of 150 mm, a width W of 9.6 mm, and a height H of 20 mm. As shown in FIG. 8, the printed part underwent no warpage as a whole, indicating excellent warpage resistance. A warpage rate of the printed part shown in FIG. 8 was measured by the above-mentioned warpage rate test method to be 0.46%.

The printed part was further subjected to a Vicat heat resistance test by the A₁₂₀ method with a force of 10 N and a heating rate of 120°C/h according to the GB/T 1633-2000 standard "*Plastics-Thermoplastic materials-Determination of Vicat softening temperature (VST)*". VST of the printed part was determined to be 144.3°C, indicating superior heat resistance.

Thus, the printing material provided in this example exhibited excellent warpage resistance during printing and enabled superior heat resistance of a printed part.

### Example 4

In this example, a 3D printing material was provided. The 3D printing material was prepared by the following method: PLA and PA6 were mixed in a mass ratio of 3:1 with a processing temperature of 150°C to 250°C to produce a blended composite material, which was a 3D printing material including a PLA crystalline phase and a PA6 crystalline phase.

In the method of this example, a first crystalline polymer in the 3D printing material was PLA, and a second crystalline polymer in the 3D printing material was PA6. According to the above-mentioned crystallinity test method, in a first heating range of 30°C to 250°C with a heating rate of 10°C/min, a melting enthalpy of the second crystalline polymer was 37.3 J/g. Since a theoretical melting enthalpy $Δ {H}_{m}^{0}$ of PA6 was 230 J/g, a crystallinity of the second crystalline polymer was calculated to be 16.2%.

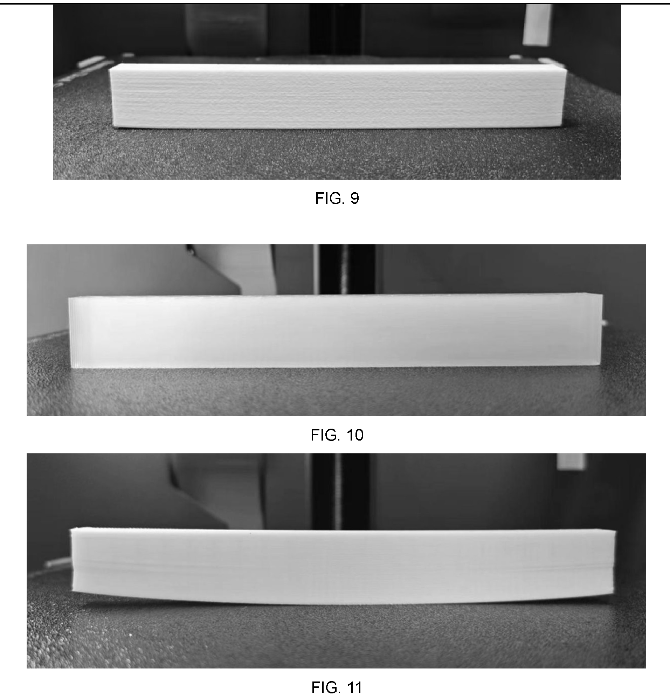

The printing material was subjected to a warpage resistance printing test at 210°C to produce a printed part. FIG. 9 shows a photograph of the printed part. The printed part in FIG. 9 has the same dimensions as the target printing model, and is a rectangular prism with a length L of 150 mm, a width W of 9.6 mm, and a height H of 20 mm. As shown in FIG. 9, the printed part underwent no warpage as a whole, indicating excellent warpage resistance. A warpage rate of the printed part shown in FIG. 9 was measured by the above-mentioned warpage rate test method to be 4.2%.

The printed part was further subjected to a Vicat heat resistance test by the A₁₂₀ method with a force of 10 N and a heating rate of 120°C/h according to the GB/T 1633-2000 standard "*Plastics-Thermoplastic materials-Determination of Vicat softening temperature (VST)*". VST of the printed part was determined to be 151.5°C, indicating superior heat resistance.

Thus, the printing material provided in this example exhibited excellent warpage resistance during printing and enabled superior heat resistance of a printed part.

### Comparative Example 1

In this comparative example, a common PLLA material was employed, and accordingly, a 3D printing material was prepared according to the same preparation method as in Example 1.

The same warpage resistance printing test as in Example 1 was conducted. A photograph of a printed part was shown in FIG. 10. As shown in FIG. 10, the printed part exhibited relatively excellent warpage resistance with a measured warpage rate of 0.21%.

VST of the printed part was determined by the A₁₂₀ method with a force of 10 N and a heating rate of 120°C/h according to the GB/T 1633-2000 standard "*Plastics-Thermoplastic materials-Determination of Vicat softening temperature (VST)*". VST of the printed part was determined to be 61.7°C, indicating that the 3D printing material prepared in this comparative example exhibited relatively poor heat resistance.

Thus, compared with the material in Example 1, the printing material provided in Comparative Example 1 failed to enable both excellent warpage resistance during printing and superior heat resistance of a printed part.

### Comparative Example 2

In this comparative example, a common PLLA material was employed, and 1% of a nucleating agent was added. Accordingly, a 3D printing material was prepared according to the same preparation method as in Example 1.

The same warpage resistance printing test as in Example 1 was conducted. A photograph of a printed part was shown in FIG. 11. As shown in FIG. 11, the printed part underwent significant warpage with a measured warpage rate of 17.3%. Compared with Example 1, the printed part in this comparative example showed poor warpage resistance.

Under the same experimental conditions, VST of the printed part was determined to be 160.7°C.

Thus, the printing material provided in Comparative Example 2 failed to enable both excellent warpage resistance during printing and superior heat resistance of a printed part.

In summary, after reading this detailed disclosure, those skilled in the art can understand that the foregoing detailed disclosure may be presented by way of example only, and may not be limited. Although there is no clear description, those skilled in the art can understand that this specification intends to cover various reasonable changes, improvements and modifications of the embodiments. These changes, improvements, and modifications are intended to be proposed in the present disclosure and are within the spirit and scope of the exemplary embodiments of the present disclosure.

The foregoing describes the specific embodiments of the present disclosure. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In addition, some specific terms in the present disclosure have been used to describe the embodiments of the present disclosure. For example, "one embodiment", "an embodiment", and/or "some embodiments" mean that a specific feature, structure, or characteristic described in combination with the embodiment may be included in at least one embodiment of the present disclosure. Therefore, it can be emphasized and should be understood that two or more references to "an embodiment" or "one embodiment" or "an alternative embodiment" in various parts of the present disclosure do not necessarily all refer to the same embodiment. In addition, specific feature, structure, or characteristic may be appropriately combined in one or more embodiments of the present disclosure.

It should be understood that in the foregoing description of the embodiments of the present disclosure, to help understand a feature, and for the purpose of simplifying the present disclosure, the present disclosure sometimes combines various features in a single embodiment, a drawing, or description thereof. Alternatively, this application disperses various features in multiple embodiments of the present invention. However, this does not mean that the combination of these features is necessary. It is entirely possible for those skilled in the art to extract some of the features as a single embodiment for understanding when reading the present disclosure. In other words, the embodiments in the present disclosure can also be understood as an integration of multiple sub-embodiments. The content of each sub-embodiment is also true when it is less than all the characteristics of a single previously disclosed embodiment.

## Claims

1. A three-dimensional (3D) printing material, comprising:
a first crystalline polymer, wherein an upper limit temperature of a crystalline melting temperature range of the first crystalline polymer is defined as a first upper limit temperature; and
a second crystalline polymer, wherein a lower limit temperature of a crystalline melting temperature range of the second crystalline polymer is defined as a second lower limit temperature; an upper limit temperature of the crystalline melting temperature range of the second crystalline polymer is defined as a second upper limit temperature; and the second lower limit temperature is higher than the first upper limit temperature,
wherein when the 3D printing material is heated to a target printing temperature:
the first crystalline polymer is melted, the 3D printing material is in a molten fluid state, and
at least a portion of the second crystalline polymer remains in a crystalline state; and
the target printing temperature is between the first upper limit temperature and the second upper limit temperature.

2. The 3D printing material according to claim 1, wherein
the target printing temperature is further between the first upper limit temperature and the second lower limit temperature.

3. The 3D printing material according to any one of claims 1 to 2, wherein
under preset conditions, a target part printed from the 3D printing material has a warpage rate of 0% to 10% after cooling; the target part has a length of 150 mm, a width of 9.6 mm, and a height of 20 mm; and the preset conditions comprise: a printing feedstock: a filament with a diameter of 1.75±0.05 mm of the 3D printing material; a printing nozzle diameter: 0.4 mm; slicing parameters during printing: a line width of 0.4 mm, a layer height of 0.2 mm, and a shell count of 13; a printing speed: 100 mm/s; a printing temperature: 190°C to 230°C; and a build plate temperature: 30°C to 60°C.

4. The 3D printing material according to claim 3, wherein
the warpage rate is 0% to 5%.

5. The 3D printing material according to any one of claims 1 to 4, wherein
the second crystalline polymer is prepared from a same type of polymer with different optical activities.

6. The 3D printing material according to any one of claims 1 to 5, wherein
the first crystalline polymer comprises a homocrystal (HC) formed from a first polymer; and the second crystalline polymer comprises a stereocomplex crystal (SC) formed from the first polymer.

7. The 3D printing material according to any one of claims 1 to 6, wherein
the first crystalline polymer comprises HC of polylactic acid (PLA); and
the second crystalline polymer comprises SC of the PLA.

8. The 3D printing material according to claim 7, wherein
the crystalline melting temperature range of the first crystalline polymer is 150°C to 180°C; and
the crystalline melting temperature range of the second crystalline polymer is 200°C to 250°C.

9. The 3D printing material according to any one of claims 7 to 8, wherein
a crystallinity of the second crystalline polymer is 1% to 50%.

10. The 3D printing material according to claim 9, wherein
the crystallinity of the second crystalline polymer is 2% to 30%.

11. The 3D printing material according to any one of claims 1 to 5, wherein
the first crystalline polymer comprises HC formed from a first polymer; and
the second crystalline polymer comprises HC formed from a second polymer.

12. The 3D printing material according to claim 11, wherein
the first crystalline polymer comprises HC of PLA; and
the second crystalline polymer comprises HC of polybutylene terephthalate (PBT) or HC of polycaprolactam (PA6).

13. The 3D printing material according to claim 12, wherein
the crystalline melting temperature range of the first crystalline polymer is 150°C to 180°C; and
the crystalline melting temperature range of the second crystalline polymer is 200°C to 250°C.

14. The 3D printing material according to any one of claims 12 to 13, wherein
a crystallinity of the second crystalline polymer is 1% to 50%.

15. The 3D printing material according to claim 14, wherein
the crystallinity of the second crystalline polymer is 2% to 30%.

16. A printing method of a 3D printing material, comprising:
feeding the 3D printing material into a print head of a 3D printer, wherein the 3D printing material comprises the 3D printing material according to any one of claims 1 to 15; and
heating the 3D printing material to a target printing temperature, extruding from the print head, and solidifying to complete printing.

17. A preparation method of a 3D printing material, comprising:
acquiring a first polymer, wherein an upper limit temperature of a crystalline melting temperature range of the first polymer is defined as a first upper limit temperature;
acquiring a second polymer, wherein a lower limit temperature of a crystalline melting temperature range of the second polymer is defined as a second lower limit temperature; an upper limit temperature of the crystalline melting temperature range of the second polymer is defined as a second upper limit temperature; and the second lower limit temperature is higher than the first upper limit temperature;
mixing the first polymer and the second polymer to produce a blended composite material comprising a first crystalline polymer and a second crystalline polymer; and
subjecting the blended composite material to extrusion molding to produce the 3D printing material, wherein a target printing temperature of the 3D printing material is between the first upper limit temperature and the second upper limit temperature.

18. The preparation method according to claim 17, wherein
the first crystalline polymer is poly-L-lactic acid (PLLA);
the second crystalline polymer is poly-D-lactic acid (PDLA); and
the blended composite material comprises SC of PLA and HC of PLA; the HC comprises the PLLA or the PDLA; and the SC has a crystallinity of 5% to 80% in the blended composite material.

19. The preparation method according to claim 17, wherein
the first crystalline polymer comprises HC formed from the first polymer; and
the second crystalline polymer comprises HC formed from the second polymer.

20. The preparation method according to claim 19, wherein
the first polymer comprises PLA, and the first crystalline polymer comprises HC of the PLA; and
the second polymer comprises PBT or PA6, and the second crystalline polymer comprises HC of the PBT or HC of the PA6.
